# EUROPÄISCHE PATENTSCHRIFT

(11) **EP 1 741 602 B1**
(45) Veröffentlichungstag und Bekanntmachung des Hinweises auf die Patenterteilung: **23.12.2009**
(21) Anmeldenummer: 06013656.1
(22) Anmeldetag: 30.06.2006
(51) Int. Cl.: B60R 19/56

(54) **Unterfahrschutzeinrichtung für ein Lastentransportfahrzeug**
Lorry under ride barrier
Dispositif anti-encastrement pour camion

(30) Priorität: 04.07.2005 DE 102005031147
(43) Veröffentlichungstag der Anmeldung: 10.01.2007
(73) Patentinhaber: Franz Xaver Meiller Fahrzeug- und Maschinenfabrik-GmbH & Co KG, 80997 München (DE)
(72) Erfinder: Gsenger, Johann, 81243 München (DE)
(74) Vertreter: Tiesmeyer, Johannes

(56) Entgegenhaltungen:
- EP-A- 1 445 153
- DE-B- 1 239 581
- DE-U1- 9 307 389
- DE-U1- 9 316 686

## Beschreibung

Die vorliegende Erfindung betrifft eine Unterfahrschutzeinrichtung für ein Lastentransportfahrzeug gemäß dem Oberbegriff von Anspruch 1.

Unterfahrschutzeinrichtungen für Lastentransportfahrzeuge sind im Stand der Technik gut bekannt und umfassen im Allgemeinen eine längliche, horizontal angeordnete Unterfahrschutzbarriere zur Sicherung eines heckseitigen Bereichs des Lastentransportfahrzeugs gegen das Auffahren bzw. Unterfahren durch ein anderes Fahrzeug. Die Unterfahrschutzbarriere stellt somit für ein auffahrendes Fahrzeug einen definierten Kollisionsbereich bereit, welche die Kollisionskräfte in die Knautschzone des auffahrenden Fahrzeugs einleitet. Da die Unterfahrschutzbarriere jedoch in einigen Betriebszuständen des Lastentransportfahrzeugs hinderlich sein kann, beispielsweise beim Be- und Entladen oder bei einem Einsatz mit einem Straßenfertiger, welcher zum Antreiben der Hinterräder des Lastentransportfahrzeugs unter dessen Heck gefahren wird, ist es bekannt, die Unterfahrschutzbarriere abnehmbar oder aus der Sicherungsstellung heraus in eine Freigabestellung verschwenkbar oder verschiebbar zu gestalten.

Eine gattungsbildende, zwischen einer den zu sichernden Bereich sperrenden Sicherungsstellung und einer den Bereich freigebenden Freigabestellung bewegbare Unterfahrschutzeinrichtung ist aus der DE 93 07 389 U1 bekannt. Diese Unterfahrschutzeinrichtung umfasst eine Unterfahrschutzbarriere und eine Halterungsanordnung mit zwei in Längsrichtung der Unterfahrschutzbarriere voneinander beabstandet angeordneten Halterungseinrichtungen zur Befestigung der Unterfahrschutzbarriere am Heck des Fahrzeugs. Jede der Halterungseinrichtungen weist jeweils zwei durch ein Gelenk miteinander verbundene Halterungsschenkel auf, von denen jeweils ein erster Halterungssenkel mit der Unterfahrschutzbarriere gelenkig verbunden ist und ein zweiter Halterungsschenkel an einem am Heck des Fahrzeugs zu befestigenden Montageträger gelenkig angebracht ist, so dass die Unterfahrschutzbarriere durch eine Gelenkbewegung der Halterungsschenkel zwischen der Sicherungsstellung und der Freigabestellung bewegbar ist. Einer der beiden zweiten Halterungsschenkel ist durch eine Kolben-Zylinder-Anordnung schwenkbar angetrieben, wobei die Schwenkbewegung des angetriebenen zweiten Halterungsschenkel auf den anderen zweiten Halterungsschenkel über eine Treibstange übertragen wird. Die ersten Halterungsschenkel sind durch jeweils eine Spiralfeder in die Freigabestellung vorgespannt.

Bei der in der DE 93 07 389 U1 offenbarten Unterfahrschutzeinrichtung tritt in der praktischen Benutzung das Problem auf, dass ein störungsfreier Betrieb der Unterfahrschutzeinrichtung nicht über längere Zeit gewährleistet werden kann. Insbesondere kann es auftreten, dass die Gelenkabschnitte und die Federn der bekannten Unterfahrschutzeinrichtung, welche während des Betriebs Witterungseinflüssen und Verunreinigung ausgesetzt sind, unterschiedliche Reibungswiderstände, d. h. unterschiedliche Beweglichkeiten, aufweisen. In diesem Fall neigen die durch die Federn oder die Treibstange angetriebenen Halterungsschenkel zu einem Verklemmen oder Verkanten der Unterfahrschutzeinrichtung.

Um eine zuverlässige Bewegung der Halterungsanordnung beim Ein- und Ausfahren der Unterfahrschutzbarriere zu sichern, ist in alternativen Lösungen des Standes der Technik daran gedacht worden, für jede der Halterungseinrichtungen eine separate Kolben-Zylinder-Anordnung bereitzustellen. Eine solche Lösung erhöht jedoch den Konstruktions- sowie den Kostenaufwand und ist zudem von einem synchronen Betrieb der beiden Kolben-Zylinder-Anordnungen abhängig. Ferner wird noch auf die DE 93 166 86 U1 hingewiesen.

Vor diesem Hintergrund ist es Aufgabe der vorliegenden Erfindung, eine Unterfahrschutzeinrichtung der oben genannten Art bereitzustellen, welche auch nach längerer Benutzungsdauer eine zuverlässige und gleichmäßige Bewegung einer Unterfahrschutzbarriere zwischen einer eingefahrenen und einer ausgefahrenen Stellung erlaubt.

Zur Lösung dieser Aufgabe wird gemäß der vorliegenden Erfindung eine Unterfahrschutzbarriere für ein Lastentransportfahrzeug gemäß Anspruch 1 bereitgestellt.

Die erfindungsgemäße Unterfahrschutzeinrichtung umfasst somit eine erste Treibstange, welche zwischen den beiden ersten Halterungsschenkeln verläuft, und eine zweite Treibstange, welche zwischen den beiden zweiten Halterungsschenkeln verläuft. Auf diese Weise werden sowohl die Schwenkbewegungen der beiden ersten Halterungsschenkel als auch die Schwenkbewegungen der beiden zweiten Halterungsschenkel jeweils durch eine Treibstange synchronisiert, so dass ein Verkanten eines der Halterungsschenkel grundsätzlich vermieden werden kann. Insbesondere kann auch in einem Falle, dass nach längerer Benutzung die verschiedenen Gelenke der Halterungsanordnung unterschiedlich große Reibungskoeffizienten aufweisen, eine direkte Synchronisierung der einander entsprechenden Halterungsschenkel erzwungen werden und eine gleichmäßige parallele Verschiebung der Unterfahrschutzbarriere sichergestellt werden.

In einer bevorzugten Ausführungsform der Erfindung kann die Unterfahrschutzbarriere durch eine Gelenkbewegung der Halterungsschenkel zwischen der eingefahrenen Stellung und der ausgefahrenen Stellung derart bewegbar sein, dass sich die Unterfahrschutzbarriere und die Halterungsschenkel im Wesentlichen in einer gemeinsamen Ebene bewegen. Auf diese Weise kann die Unterfahrschutzeinrichtung der Erfindung auf besonders platzsparende Weise bewegt werden und insbesondere in der Freigabestellung ein möglichst großer Freiraum unterhalb des Hecks des Fahrzeugs gewährleistet werden. Dies ist z. B. für den Betrieb mit einem Straßenfertiger von Vorteil, welcher während des Einsatzes unter das Heck des Lastentransportfahrzeugs fährt, um die Hinterräder des Lastentransportfahrzeugs anzutreiben.

Grundsätzlich ist es möglich, dass die oben angesprochene Bewegung der erfindungsgemäßen Unterfahrschutzeinrichtung zwischen eingefahrener und ausgefahrener Stellung Teil einer mehrstufigen Bewegung der Unterfahrschutzbarriere zwischen einer den zu sichernden Bereich sperrenden Sicherungsstellung und einer den Bereich freigebenden Freigabestellung ist. In einer technisch besonders einfachen Ausführungsform kann jedoch die ausgefahrene Stellung die den zu sichernden Bereich sperrende Sicherungsstellung und die eingefahrene Stellung die den Bereich freigebende Freigabestellung sein. Auf diese Weise ist die Unterfahrschutzeinrichtung dafür eingerichtet, die Unterfahrschutzbarriere durch die Gelenkbewegung der Halterungsschenkel zwischen der Sicherungsstellung und der Freigabestellung zu bewegen.

Eine symmetrische Gewichtsverteilung der Unterfahrschutzeinrichtung bezüglich der Längsmittelachse des Fahrzeugs kann in einer weiteren Ausführungsform dadurch erreicht werden, dass die Treibstangen derart eingerichtet sind, dass die durch die Treibstangen jeweils miteinander verbundenen Halterungsschenkel im Wesentlichen um parallele Schwenkachsen und mit zueinander entgegengesetztem Drehsinn verschwenken.

Um zu verhindern, dass sich die beiden die Halterungsschenkel miteinander verbindenden Gelenke der Halterungseinrichtungen beim Einfahren der Unterfahrschutzbarriere gegenseitig behindern, wird weiterhin vorgeschlagen, dass die Halterungsschenkel derart angeordnet sein können, dass sich die Gelenke der beiden Halterungseinrichtungen bei der Bewegung der Unterfahrschutzbarriere von der ausgefahrenen Stellung in die eingefahrene Stellung voneinander entfernen.

Ferner wird vorgeschlagen, dass die Treibstangenanordnungen die Bewegung der Halterungseinrichtungen derart führen können, dass in einem am Fahrzeug montierten Zustand die Orientierung der Unterfahrschutzbarriere relativ zum Fahrzeug während der Bewegung der Unterfahrschutzbarriere zwischen der eingefahrenen Stellung und der ausgefahrenen Stellung im Wesentlichen konstant bleibt. Dadurch wird der Bewegungsablauf des Ein- und Ausfahrens der Unterfahrschutzbarriere möglichst einfach gestaltet und ein Verkanten bzw. Verklemmen der Halterungsschenkel bzw. der Gelenke wird zuverlässig verhindert.

Prinzipiell ist es möglich, die Unterfahrschutzeinrichtung gemäß der vorliegenden Erfindung manuell, beispielsweise durch Verschieben der Unterfahrschutzbarriere per Hand, zwischen der ein- und ausgefahrenen Stellung zu bewegen. Dabei stellen die erfindungsgemäß eingerichteten Treibstangen sicher, dass auch bei einseitiger Kraftausübung, etwa auf ein Seitenende der Unterfahrschutzbarriere, beide Halterungseinrichtungen synchron verschwenken und die Unterfahrschutzbarriere zuverlässig und ohne Verklemmen oder Verkanten parallel bewegt wird. Um den Bedienkomfort zu erhöhen, kann jedoch auch an eine Ausführungsform gedacht werden, in welcher eine mit der Halterungsanordnung oder mit der Unterfahrschutzbarriere zusammenwirkende Stelleinrichtung zur wahlweisen Bewegung der Unterfahrschutzbarriere zwischen der eingefahrenen Stellung und der ausgefahrenen Stellung bereitgestellt ist. Die Stelleinrichtung kann dann eine der Halterungseinrichtungen antreiben, wobei die Treibstangenanordnungen die Bewegung der angetriebenen Halterungseinrichtung auf die andere Halterungseinrichtung überträgt, um die andere Halterungseinrichtung im Wesentlichen synchron mit der angetriebenen Halterungseinrichtung zu bewegen.

Auch bei der soeben beschriebenen Ausführungsform wirkt sich die Verwendung einer ersten und einer zweiten Treibstange vorteilhaft dahingehend aus, dass die Schwenkbewegung des durch die Stelleinrichtung angetriebenen Halterungsschenkels redundant über zwei verschiedene Kraftwege auf die anderen Halterungsschenkel übertragen wird.

Die Stelleinrichtung kann eine aktivierbare Kolben-Zylinder-Anordnung umfassen. Eine solche Kolben-Zylinder-Anordnung ist leicht zu montieren und zuverlässig ansteuerbar. Beispielsweise kann ein Bauteil von Kolben und Zylinder am Heck des Fahrzeugs anzubringen oder an dem Montageträger oder der Unterfahrschutzbarriere angebracht sein und das andere Bauteil von Kolben und Zylinder kann an einer der beiden Halterungseinrichtungen, vorzugsweise an einem nächstliegenden Halterungsschenkel einer der beiden Halterungseinrichtungen, angebracht sein.

Alternativ kann die Stelleinrichtung jedoch auch zwischen der ersten Halterungseinrichtung und der zweiten Halterungseinrichtung wirken. Diese Anordnung kann ggf. Vorteile bei der Montage mit sich bringen, da insbesondere keine Montage der Stelleinrichtung an dem Montageträger notwendig ist. Auch bei dieser alternativen Anordnung kann die Stelleinrichtung eine Kolben-Zylinder-Anordnung umfassen, wobei ein Bauteil von Kolben und Zylinder an der rechten Halterungseinrichtung, vorzugsweise an einem Halterungsschenkel der rechten Halterungseinrichtung, angebracht ist, und das andere Bauteil an der linken Halterungseinrichtung, vorzugsweise an einem Halterungsschenkel der linken Halterungseinrichtung, angebracht ist. Eine derartige Anordnung ermöglicht eine direkte Bewegungsverkopplung der beiden Halterungseinrichtungen und reduziert die Gefahr eines Verklemmens oder eines Verkantens der Unterfahrschutzeinrichtung beim Ein- und Ausfahren weiter.

Wenngleich die Treibstangen und die Stelleinrichtung an den Halterungsschenkeln direkt angekoppelt sein können, ist es doch insbesondere zur Realisierung von gegenläufigen Schwenkbewegungen zwischen erster und zweiter Halterungseinrichtung von Vorteil, wenn die Treibstangen an mindestens einem der Halterungsschenkel über einen starr mit dem Halterungsschenkel verbundenen Hilfsarm angekoppelt sind oder/und die Kolben-Zylinder-Anordnung an einem der Halterungsschenkel über einen starr mit dem Halterungsschenkel verbundenen Stellarm angekoppelt ist. Durch die Länge und Orientierung des Stellarms kann dann ein optimaler Hebelpunkt für die Bewegung des betreffenden Halterungsschenkels festgelegt werden.

Die Halterungseinrichtungen der Unterfahrschutzeinrichtung sind für die erforderliche Bewegungsstrecke zwischen ein- und ausgefahrener Stellung dann besonders effektiv ausgelegt, wenn die Halterungsschenkel der beiden Halterungseinrichtungen in der ausgefahrenen Stellung der Unterfahrschutzbarriere in einer Streckstellung angeordnet sind.

Außerdem wird vorgeschlagen, dass die Halterungsschenkel einer jeweiligen Halterungseinrichtung in der eingefahrenen Stellung der Unterfahrschutzbarriere in einer Knickstellung mit maximaler Annäherung der Halterungsschenkel angeordnet sind, so dass die Unterfahrschutzeinrichtung in der eingefahrenen Stellung möglichst wenig Raum in Anspruch nimmt.

Die vorliegende Erfindung wird nachfolgend anhand eines bevorzugten Ausführungsbeispiels unter Bezugnahme auf die beigefügten Zeichnungen näher erläutert. Es zeigen:
- Fig. 1: eine perspektivische Ansicht einer erfindungsgemäßen Unterfahrschutzeinrichtung gemäß einem ersten Ausführungsbeispiel der Erfindung,
- Fig. 2: eine Draufsicht der in Fig. 1 gezeigten Unterfahrschutzeinrichtung in der ausgefahrenen Stellung,
- Fig. 3: eine Draufsicht der in Fig. 1 gezeigten Unterfahrschutzeinrichtung in einer mittleren Stellung,
- Fig. 4: eine Draufsicht der in Fig. 1 gezeigten Unterfahrschutzeinrichtung in der eingefahrenen Stellung und
- Fig. 5: eine Draufsicht einer Unterfahrschutzvorrichtung gemäß einem zweiten Ausführungsbeispiel der Erfindung.

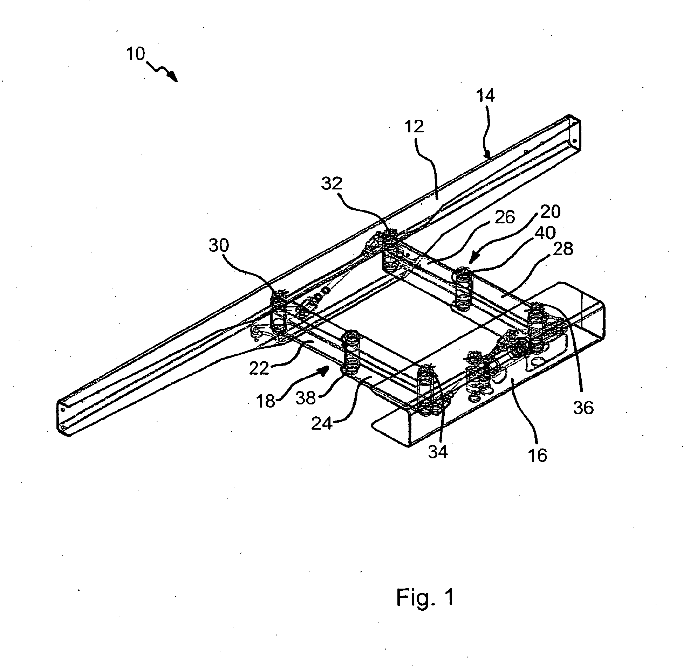

In Fig. 1 ist ein Ausführungsbeispiel einer erfindungsgemäßen Unterfahrschutzeinrichtung perspektivisch dargestellt und allgemein mit 10 bezeichnet. Die in der folgenden Beschreibung des Ausführungsbeispiels verwendeten Positions- und Richtungsangaben, wie "oben", "unten", "vertikal", "horizontal" und ähnliche, beziehen sich auf den Zustand, in welchem die Unterfahrschutzeinrichtung 10 am Heck eines Lastentransportfahrzeugs montiert ist, und sind aus der Sichtweise des Fahrers des Lastentransportfahrzeugs zu verstehen.

Die Unterfahrschutzeinrichtung 10 umfasst eine Unterfahrschutzbarriere 12, deren Vorderseite 14 als Soll-Kollisionsbereich für ein auffahrendes Fahrzeug bereitgestellt ist, einen Montageträger 16 zur Befestigung der Unterfahrschutzeinrichtung 10 am Heck (nicht gezeigt) des Lastentransportfahrzeugs sowie zwei Halterungseinrichtungen 18, 20, über die die Unterfahrschutzbarriere 12 an dem Montageträger 16 gehalten ist.

In dem am Fahrzeug montierten Zustand ist die Unterfahrschutzbarriere 12 in jedem Bewegungszustand im Wesentlichen horizontal, d. h. parallel zur Fahrbahnebene und senkrecht zur Längsachse des Fahrzeugs orientiert. Für die Aufnahme von Kollisionskräften ist die Unterfahrschutzbarriere 10 aus entsprechend robustem Material, z. B. Stahl, hergestellt und durch entsprechende Profilierung zusätzlich versteift.

Der am Heck des Lastentransportfahrzeugs zu befestigende Montageträger 16 weist die Form eines U-Profils auf und ist im Wesentlichen parallel zur Unterfahrschutzbarriere 12 angeordnet.

Jede der Halterungseinrichtungen 18, 20 umfasst jeweils zwei gelenkig miteinander verbundene Halterungsschenkel 22, 24 bzw. 26, 28, welche jeweils im Wesentlichen als U-förmige Längsprofile ausgebildet sind. Von diesen Halterungsschenkeln 22, 24, 26, 28 sind jeweils erste Halterungsschenkel 22, 26 über Gelenkverbindungen 30, 32 mit der Unterfahrschutzbarriere 12 gelenkig verbunden und zweite Halterungsschenkel 24, 28 sind über Gelenkverbindungen 34, 36 mit dem Montageträger 16 gelenkig verbunden. Die von den Gelenkverbindungen 30, 34 abgewandten Enden der Halterungsschenkel 22, 24 der rechten Halterungseinheit 18 sind miteinander in einem Kniegelenk 38 verbunden und die von den Gelenkverbindungen 32, 36 abgewandten Enden der Halterungsschenkel 26, 28 der linken Halterungseinheit 20 sind miteinander in einem Kniegelenk 40 gelenkig verbunden.

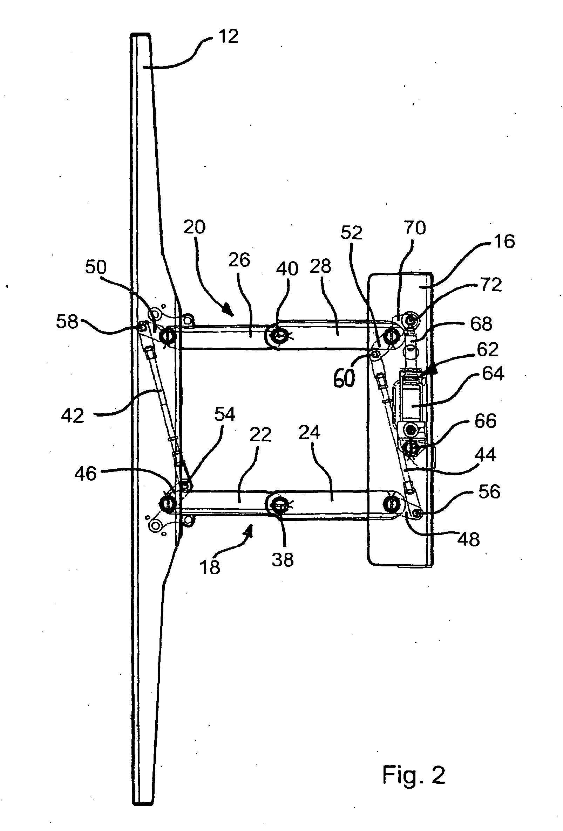

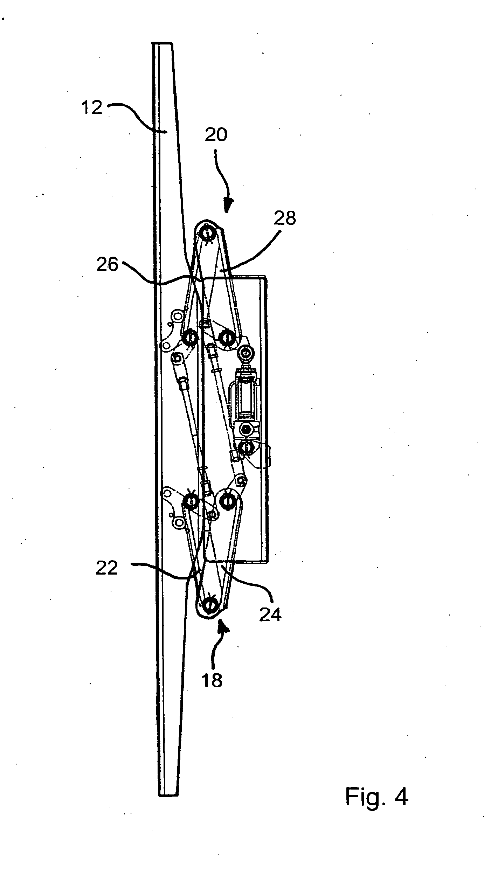

Durch diese Konstruktion können die rechte Halterungseinrichtung 18 und die linke Halterungseinrichtung 20 an ihren Kniegelenken 38 bzw. 40 eingeknickt bzw. gestreckt werden, wodurch der Abstand zwischen Unterfahrschutzbarriere 12 und Montageträger 16 verändert werden kann und die Unterfahrschutzbarriere zwischen einem eingefahrenen Zustand und einem ausgefahrenen Zustand bewegbar ist. In dem in den Figuren gezeigten Ausführungsbeispiel sind dabei die Halterungsschenkel 22, 24, 26, 28 derart angeordnet, dass die Öffnungen der U-Profile der Halterungsschenkel 22, 24 der rechten Halterungseinrichtung 18 denen der linken Halterungseinrichtung 20 zugewandt sind. Die Halterungseinrichtungen 18, 20 werden sich somit beim Einknicken der Kniegelenke 38, 40 von der in Fig. 1 und 2 gezeigten ausgefahrenen Stellung in Richtung der in Fig. 4 gezeigten eingefahrenen Stellung derart bewegen, dass sich die Kniegelenke 38, 40 voneinander entfernen.

Unter Bezugnahme auf die Fig. 2, 3 und 4 wird nachfolgend ein Synchronisationsmechanismus der Unterfahrschutzeinrichtung gemäß dem Ausführungsbeispiel näher erläutert. Der Synchronisationsmechanismus umfasst eine erste Treibstange 42, welche zwischen dem ersten Halterungsschenkel 22 der rechten Halterungseinrichtung 18 und dem ersten Halterungsschenkel 26 der linken Halterungseinrichtung 20 verläuft, sowie eine zweite Treibstange 44, welche zwischen dem zweiten Halterungsschenkel 24 der rechten Halterungseinrichtung 18 und dem zweiten Halterungsschenkel 28 der linken Halterungseinrichtung 20 verläuft. Für die Ankopplung der Treibstangen 42, 44 an die jeweiligen Halterungsschenkel ist an jedem der Halterungsschenkel 22, 24, 26, 28, jeweils an dem dem Kniegelenk 38 bzw. 40 abgewandten Ende, ein Hilfsarm 46, 48, 50, 52 befestigt oder starr ausgebildet. An den freien Enden dieser Hilfsarme 46, 48, 50, 52 sind die Treibstangen 42 bzw. 44 jeweils über Gelenkverbindungen 54, 56, 58, 60 angekoppelt.

Die Länge der Hilfsarme 46, 48, 50, 52 sowie ihre Orientierung relativ zu ihren jeweiligen Halterungsschenkeln 22, 24, 26, 28 können bei der Konstruktion der Unterfahrschutzeinrichtung 10 geeignet gewählt werden, um die Bewegungen der jeweils miteinander verbundenen Halterungschenkel zu synchronisieren und die Drehrichtung und Kraftübertragung zwischen den Halterungsschenkeln festzulegen. In dem in den Figuren dargestellten Ausführungsbeispiel der erfindungsgemäßen Unterfahrschutzeinrichtung 10 sind die einzelnen Hilfsarme 46, 48, 50, 52 in der vollständig ausgefahrenen Stellung der Unterfahrschutzeinrichtung, d. h. bei im Wesentlichen in Fahrtrichtung ausgerichteten und vollständig gestreckten Halterungsschenkeln, wie folgt orientiert (die Richtungsangaben beziehen sich auf die Fahrtrichtung): Das freie Ende des Hilfsarms 46 des ersten Halterungsschenkels 22 der rechten Halterungseinrichtung 18 weist schräg nach vorn links, das freie Ende des Hilfsarms 48 des zweiten Halterungsschenkels 24 der rechten Halterungseinrichtung 18 weist schräg nach vorne rechts, das freie Ende des Hilfsarms 50 des ersten Halterungsschenkels 26 der linken Halterungseinrichtung 20 weist schräg nach hinten links und das freie Ende des Hilfsarms 52 des zweiten Halterungsschenkels 28 der linken Halterungseinrichtung 20 weist schräg nach hinten rechts.

Das in den Figuren dargestellte Ausführungsbeispiel einer erfindungsgemäßen Unterfahrschutzeinrichtung 10 weist weiterhin eine Kolben-Zylinder-Anordnung 62 auf, mit welcher die Bewegung der Halterungseinrichtungen 18, 20 und somit der Unterfahrschutzbarriere 12 antreibbar ist. Die Kolben-Zylinder-Anordnung 62 weist einen Zylinder 64 auf, welcher über einen Drehpunkt 66 schwenkbar am Montageträger 16 angebracht ist. In den Zylinder 64 ist ein Kolben 68 eingeführt, dessen freies Ende mit dem zweiten Halterungsschenkel 28 der linken Halterungseinrichtung 20 gekoppelt ist. Für die Kopplung zwischen dem Kolben 68 und dem Halterungsschenkel 28 weist der Halterungsschenkel 28 an dem dem Kniegelenk 40 abgewandten Ende, an welchem auch der Hilfsarm 52 vorgesehen ist, einen an dem Halterungsschenkel 28 befestigten oder starr an diesem ausgebildeten Stellarm 70 auf. Am freien Ende ist der Kolben 68 über eine Gelenkverbindung 72 angekoppelt.

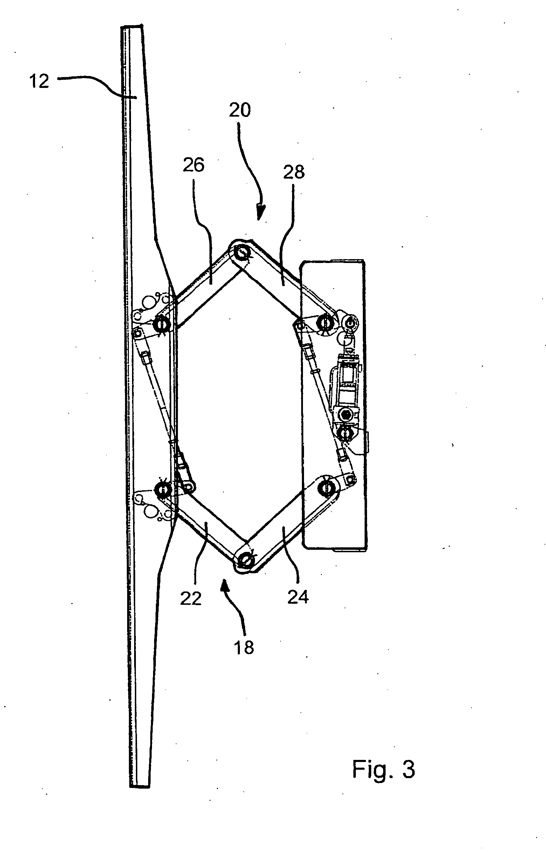

Unter Bezugnahme auf die Fig. 2, 3 und 4 wird nachfolgend der Betrieb der erfindungsgemäßen Unterfahrschutzeinrichtung 10 zum Bewegen der Unterfahrschutzbarriere 12 zwischen der in Fig. 2 gezeigten ausgefahrenen Stellung und der in Fig. 4 gezeigten eingefahrenen Stellung beschrieben. In der in Fig. 2 gezeigten ausgefahrenen Stellung ist der Kolben 68 aus dem Zylinder 64 ausgefahren, die Kniegelenke 38, 40 sind gestreckt und alle Halterungsschenkel 22, 24, 26, 28 sind im Wesentlichen parallel zur Fahrtrichtung ausgerichtet. Wird in dieser Stellung die Kolben-Zylinder-Anordnung 62 derart betätigt, dass der Kolben 68 in den Zylinder 64 einfährt, so wird diese lineare Bewegung über den Stellarm 70 auf den zweiten Halterungsschenkel 28 der linken Halterungseinheit 20 übertragen, um diesen seitlich nach außen zu schwenken. Durch die zweite Treibstange 44 wird diese Schwenkbewegung gleichzeitig auch auf den zweiten Halterungsschenkel 24 der rechten Halterungseinrichtung 18 übertragen, so dass diese ebenfalls seitlich nach außen schwenkt (vgl. Fig. 3).

Durch die Schwenkbewegung bewegen sich die Kniegelenke 38, 40 seitlich nach außen voneinander weg und übertragen somit die Schwenkbewegung auf die ersten Halterungsschenkel 22 bzw. 26. Zusätzlich findet jedoch eine Kraftübertragung zwischen den Halterungsschenkeln auch über die erste Treibstange 42 statt, welche zwischen den ersten Halterungsschenkeln 22, 26 verläuft. Auf diese Weise wird beispielsweise der in der Kraftübertragungskette am weitesten von der Kolben-Zylinder-Anordnung 62 entfernteste erste Halterungsschenkel 22 der rechten Halterungseinrichtung 18 sowohl über die zweite Treibstange 44 und den zweiten Halterungsschenkel 24 der rechten Halterungseinrichtung 18 angetrieben als auch über die Halterungsschenkel 26, 28 der linken Halterungseinrichtung 20 und die erste Treibstange 42. Da beide Kraftketten dieselbe Schwenkbewegung des Halterungsschenkels 22 unterstützen, wird dieser redundant an zwei Enden gleichzeitig angetrieben, so dass ein klemmfreier Betrieb sehr zuverlässig gewährleistet werden kann.

Da auch die anderen Halterungsschenkel 24, 28, 26 auf analoge Weise durch zwei verschiedene Kraftübertragungswege, welche auf ihre entgegengesetzten Enden wirken, redundant bewegt werden, kann durch die erfindungsgemäße Konstruktion ein hohes Maß an Synchronisation der Bewegung aller Halterungsschenkel und ein hohes Maß an Funktionssicherheit der Halterungseinrichtungen auch nach langer Benutzung erzielt werden.

Wird der Kolben 68 der Kolben-Zylinder-Anordnung 62 über die in Fig. 3 gezeigte mittlere Stellung hinaus weiter in den Zylinder 64 eingefahren, so erreicht er schließlich eine in Fig. 4 gezeigte vollständig eingefahrene Stellung, in welcher die Kniegelenke 38, 40 im Wesentlichen vollständig geschlossen sind und die Unterfahrschutzbarriere 12 im Wesentlichen ganz an den Montageträger 16 herangefahren ist. Im gezeigten Ausführungsbeispiel entspricht diese Stellung der Freigabestellung, in welcher der zu sichernde Bereich freigegeben ist, so dass die Unterfahrschutzbarriere 12 die Arbeit des Lastentransportfahrzeugs oder eines anderen Geräts oder Fahrzeugs nicht behindert.

Um die Unterfahrschutzeinrichtung 10 aus der eingefahrenen Stellung wieder in die ausgefahrene Stellung zu bewegen, wird der Betrieb der Kolben-Zylinder-Anordnung 62 umgekehrt, so dass der Kolben 68 wieder aus dem Zylinder 64 herausfährt und die Halterungsschenkel 22, 24, 26, 28 allmählich wieder in die gestreckte Stellung gemäß Fig. 2 bringt.

Aus den Figuren ist deutlich, dass im Wesentlichen alle Bauteile der erfindungsgemäßen Unterfahrschutzeinrichtung 10 in einer horizontalen Ebene (in Fig. 2, 3 und 4 in der Zeichenebene) liegen und dass sie auch während aller Bewegungen der Unterfahrschutzeinrichtung 10 in dieser Ebene verbleiben.

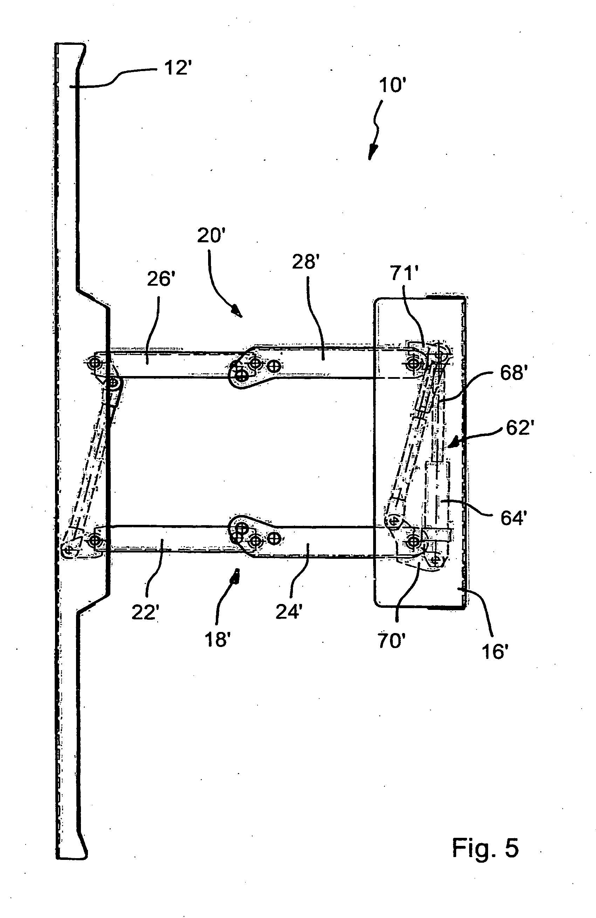

Figur 5 zeigt eine Draufsicht einer Unterfahrschutzeinrichtung 10' in ausgefahrener Stellung gemäß einem zweiten Ausführungsbeispiel der Erfindung. Die Unterfahrschutzeinrichtung 10' des zweiten Ausführungsbeispiels unterscheidet sich von der des ersten Ausführungsbeispiels dadurch, dass die Kolben-Zylinder-Anordnung 62' zwischen der rechten Halterungseinrichtung 18' und der linken Halterungseinrichtung 20' wirkt. Genauer ist ein Kolben 68' der Kolben-Zylinder-Anordnung 62' an einen linken Stellarm 71' angekoppelt, welcher fest mit dem zweiten Halterungsschenkel 28' der linken Halterungseinrichtung 20' verbunden oder integral mit diesem ausgebildet ist, und ein Zylinder 64' der Kolben-Zylinder-Anordnung 62' ist an einen rechten Stellarm 70' angekoppelt, welcher fest mit dem zweiten Halterungsschenkel 24' der rechten Halterungseinrichtung 18' verbunden oder integral mit diesem ausgebildet ist. Auf diese Weise werden die zweiten Halterungsschenkel 24' und 28' bei Betätigung der Kolben-Zylinder-Anordnung 62' mit zueinander entgegengesetztem Drehsinn verschwenkt werden.
In der Anordnung gemäß dem zweiten Ausführungsbeispiel ist es denkbar, dass auf den Montageträger 16' verzichtet werden kann, wobei die zweiten Halterungsschenkel 24', 28' in diesem Fall direkt am Heck des Fahrzeugs schwenkbar angebracht werden könnten.

## Patentansprüche

1. Unterfahrschutzeinrichtung (10; 10') für ein Lastentransportfahrzeug, umfassend
- eine längliche, normalerweise horizontal angeordnete Unterfahrschutzbarriere (12; 12') zur Sicherung eines heckseitigen Bereichs des Lastentransportfahrzeugs gegen das Auffahren bzw. Unterfahren durch ein anderes Fahrzeug, und
- eine Halterungsanordnung (18, 20; 18', 20') mit zwei in Längsrichtung der Unterfahrschutzbarriere (12; 12') voneinander beabstandet an der Unterfahrschutzbarriere (12; 12') angeordneten Halterungseinrichtungen (18, 20; 18', 20') zur Befestigung der Unterfahrschutzbarriere (12; 12') am Heck des Fahrzeugs,
wobei die Halterungseinrichtungen (18, 20; 18', 20') jeweils zwei durch ein Gelenk (38, 40) miteinander verbundene Halterungsschenkel (22, 24, 26, 28; 22', 24', 26', 28') aufweisen, von denen jeweils ein erster Halterungsschenkel (22, 26; 22', 26') mit der Unterfahrschutzbarriere (12; 12') gelenkig verbunden ist und ein zweiter Halterungsschenkel (24, 28; 24', 28') am Heck des Fahrzeugs gelenkig anzubringen ist oder an einem am Heck des Fahrzeugs zu befestigenden Montageträger (16; 16') gelenkig angebracht ist, sodass die Unterfahrschutzbarriere (12; 12') durch eine Gelenkbewegung der Halterungsschenkel (22, 24, 26, 28; 22', 24', 26', 28') bewegbar ist,
**dadurch gekennzeichnet, dass** die Unterfahrschutzbarriere (12; 12') ferner eine erste Treibstange (42) umfasst, welche zwischen den beiden ersten Halterungsschenkeln (22, 26; 22', 26') verläuft und mit diesen gelenkig verbunden ist, und eine zweite Treibstange (44) umfasst, welche zwischen den beiden zweiten Halterungsschenkeln (24, 28; 24', 28') verläuft und mit diesen gelenkig verbunden ist, wobei die Treibstangen (42, 44) derart angeordnet sind, dass die Schwenkbewegungen der einander entsprechenden Halterungsschenkel (22, 26, 24, 28; 22', 24', 26' 28') der beiden Halterungseinrichtungen (18, 20; 18' 20') im Wesentlichen synchron erfolgen.

2. Unterfahrschutzeinrichtung (10; 10') nach Anspruch 1, **dadurch gekennzeichnet, dass** die Unterfahrschutzbarriere (12; 12') durch eine Gelenkbewegung der Halterungsschenkel (22, 24, 26, 28; 22', 24', 26', 28') zwischen einer eingefahrenen Stellung und einer ausgefahrenen Stellung derart bewegbar ist, dass sich die Unterfahrschutzbarriere (12; 12') und die Halterungsschenkel (22, 24, 26, 28; 22', 24', 26', 28') im Wesentlichen in einer gemeinsamen Ebene bewegen.

3. Unterfahrschutzeinrichtung (10; 10') nach Anspruch 1 oder Anspruch 2, **dadurch gekennzeichnet, dass** die ausgefahrene Stellung eine den zu sichernden Bereich sperrende Sicherungsstellung ist und die eingefahrene Stellung eine den Bereich freigebende Freigabestellung ist.

4. Unterfahrschutzeinrichtung (10; 10') nach einem der vorhergehenden Ansprüche, **dadurch gekennzeichnet, dass** die Treibstangen (42, 44) derart eingerichtet sind, dass die durch diese jeweils miteinander verbundenen Halterungsschenkel (22, 26, 24, 28; 22', 24', 26', 28') im Wesentlichen um parallele Schwenkachsen und mit zueinander entgegengesetztem Drehsinn verschwenken.

5. Unterfahrschutzeinrichtung (10; 10') nach einem der vorhergehenden Ansprüche, **dadurch gekennzeichnet, dass** sich Gelenke (38, 40) der beiden Halterungseinrichtungen (18, 20; 18', 20') bei der Bewegung der Unterfahrschutzbarriere (12; 12') von der ausgefahrenen Stellung in die eingefahrene Stellung voneinander entfernen.

6. Unterfahrschutzeinrichtung (10; 10') nach einem der vorhergehenden Ansprüche, **dadurch gekennzeichnet, dass** die Treibstangen (42, 44) die Bewegung der Halterungseinrichtungen (18, 20; 18', 20') derart führen, dass in einem am Fahrzeug montierten Zustand die Orientierung der Unterfahrschutzbarriere (12; 12') relativ zum Fahrzeug während der Bewegung der Unterfahrschutzbarriere (12; 12') zwischen der eingefahrenen Stellung und der ausgefahrenen Stellung im Wesentlichen konstant bleibt.

7. Unterfahrschutzeinrichtung (10; 10') nach einem der vorhergehenden Ansprüche, **dadurch gekennzeichnet, dass** mindestens eine der Treibstangen (42, 44) an mindestens einem der Halterungsschenkel (22, 24, 26, 28; 22', 24', 26', 28') über einen starr mit dem Halterungsschenkel verbundenen Hilfsarm (46, 48, 50, 52) angekoppelt ist.

8. Unterfahrschutzeinrichtung (10; 10') nach einem der vorhergehenden Ansprüche, ferner **gekennzeichnet durch** eine mit der Halterungsanordnung (18, 20; 18' 20') oder mit der Unterfahrschutzbarriere (12; 12') zusammenwirkende Stelleinrichtung (62; 62') zur wahlweisen Bewegung der Unterfahrschutzbarriere (12; 12') zwischen der eingefahrenen Stellung und der ausgefahrenen Stellung.

9. Unterfahrschutzeinrichtung (10) nach Anspruch 7, **dadurch gekennzeichnet, dass** durch die Stelleinrichtung (62) zur Bewegung der Unterfahrschutzbarriere (12) eine der Halterungseinrichtungen (18, 20) antreibbar ist und die Treibstangen (42, 44) die Bewegung der angetriebenen Halterungseinrichtung (20) auf die andere Halterungseinrichtung (18) überträgt, um die andere Halterungseinrichtung (18) im Wesentlichen synchron mit der angetriebenen Halterungseinrichtung (20) zu bewegen.

10. Unterfahrschutzeinrichtung (10') nach Anspruch 8, **dadurch gekennzeichnet, dass** die Stelleinrichtung (62') zwischen der ersten Halterungseinrichtung (18') und der zweiten Halterungseinrichtung (20') wirkt.

11. Unterfahrschutzeinrichtung (10') nach Anspruch 10, **dadurch gekennzeichnet, dass** die Stelleinrichtung (62') eine aktivierbare Kolben-Zylinder-Anordnung (62') umfasst, wobei ein Bauteil (64') von Kolben (68') und Zylinder (64') an der rechten Halterungseinrichtung (18'), vorzugsweise an einem Halterungsschenkel (22', 24') der rechten Halterungseinrichtung (18'), angebracht ist, und das andere Bauteil (68') an der linken Halterungseinrichtung (20'), vorzugsweise an einem Halterungsschenkel (26', 28') der linken Halterungseinrichtung (20'), angebracht ist.

12. Unterfahrschutzeinrichtung (10) nach Anspruch 8 oder 9, **dadurch gekennzeichnet, dass** die Stelleinrichtung (62) eine aktivierbare Kolben-Zylinder-Anordnung (62) umfasst.

13. Unterfahrschutzeinrichtung (10) nach Anspruch 12, **dadurch gekennzeichnet, dass** ein Bauteil (64) von Kolben (68) und Zylinder (64) am Heck des Fahrzeugs anzubringen oder an dem Montageträger (16) oder der Unterfahrschutzbarriere (12) angebracht ist und das andere Bauteil (68) von Kolben (68) und Zylinder (64) an einer der beiden Halterungseinrichtungen (18, 20), vorzugsweise an einem nächstliegenden Halterungsschenkel (28) einer der beiden Halterungseinrichtungen (18, 20), angebracht ist.

14. Unterfahrschutzeinrichtung (10; 10') nach einem der Ansprüche 11 bis 13, **dadurch gekennzeichnet, dass** die Kolben-Zylinder-Anordnung (62; 62') an mindestens einem der Halterungsschenkel (22, 24, 26, 28; 22', 24', 26', 28') über einen starr mit dem Halterungsschenkel (28; 24', 28') verbundenen Stellarm (70; 70', 71') angekoppelt ist.

15. Unterfahrschutzeinrichtung (10; 10') nach einem der vorhergehenden Ansprüche, **dadurch gekennzeichnet, dass** die Halterungsschenkel (22, 24, 26, 28; 22', 24', 26', 28') der beiden Halterungseinrichtungen (18, 20; 18', 20') in der ausgefahrenen Stellung der Unterfahrrschutzbarriere (12; 12') in einer Streckstellung angeordnet sind.

16. Unterfahrschutzeinrichtung (10; 10') nach einem der vorhergehenden Ansprüche, **dadurch gekennzeichnet, dass** die Halterungsschenkel (22, 24, 26, 28; 22', 24', 26', 28') einer jeweiligen Halterungseinrichtung (18, 20; 18', 20') in der eingefahrenen Stellung der Unterfahrschutzbarriere (12; 12') in einer Knickstellung mit maximaler Annäherung der Halterungsschenkel (22, 24, 26, 28; 22', 24', 26', 28') angeordnet sind.

## Claims

1. An underride protection device (10;10') for a load conveying vehicle, comprising
- an elongate, normally horizontally arranged underride protection barrier (12;12') for protecting a rear zone of the load conveying vehicle against being driven into or underridden by another vehicle, and
- a mounting assembly (18,20;18',20') with two mounting devices (18,20;18',20'), which are spaced apart in the longitudinal direction of the underride protection barrier (12;12') and are disposed on the underride protection barrier (12;12'), for securing the underride protection barrier (12;12') to the rear of the vehicle,
wherein the mounting devices (18,20;18',20') each have two mounting arms (22,24,26,28; 22',24',26',28') which are connected to one another by a pivot (38,40) and of which a respective first mounting arm (22,26;22',26') is pivotably connected to the underride protection barrier (12;12') and a second mounting arm (24,28;24',28') is to be pivotably mounted at the rear of the vehicle or is pivotably mounted on a mounting support (16;16') to be secured at the rear of the vehicle so that the underride protection barrier (12;12') can be moved by a pivoting movement of the mounting arms (22,24,26,28; 22',24',26',28'),
**characterised in that** the underride protection barrier (12;12') further comprises a first connecting rod (42) which extends between the two first mounting arms (22,26;22',26') and is pivotably connected thereto, and comprises a second connecting rod (44) which extends between the two second mounting arms (24,28;24',28') and is pivotably connected thereto, wherein the connecting rods (42,44) are arranged so that the pivoting movements of the mutually corresponding mounting arms (22,24,26,28; 22',24',26',28') of the two mounting devices (18,20;18',20') take place substantially in synchronism.

2. An underride protection device (10;10') according to Claim 1, **characterised in that** the underride protection barrier (12;12') can be moved by a pivoting movement of the mounting arms (22,24,26,28; 22',24',26',28') between a retracted position and an extended position so that the underride protection barrier (12;12') and the mounting arms (22,24,26,28; 22',24',26',28') move substantially in a common plane.

3. An underride protection device (10;10') according to Claim 1 or Claim 2, **characterised in that** the extended position is a safety position, blocking the zone to be protected, and the retracted position is a release position clearing the zone.

4. An underride protection device (10;10') according to any one of the preceding Claims, **characterised in that** the connecting rods (42,44) are so adjusted that the mounting arms (22,24,26,28; 22', 24',26',28') respectively connected to one another by the connecting rods pivot substantially about parallel pivot axes and in a mutually opposed direction of rotation.

5. An underride protection device (10;10') according to any one of the preceding Claims, **characterised in that** the pivots (38,40) of the two mounting devices (18,20;18',20') move apart from one another during the movement of the underride protection barrier (12;12') from the extended position into the retracted position.

6. An underride protection device (10;10') according to any one of the preceding Claims, **characterised in that** the connecting rods (42,44) guide the movement of the mounting devices (18,20;18',20') in such a way that, in a vehicle-mounted condition, the alignment of the underride protection barrier (12;12') relative to the vehicle remains essentially constant during the movement of the underride protection barrier (12;12') between the retracted position and the extended position.

7. An underride protection device (10;10') according to any one of the preceding Claims, **characterised in that** at least one of the connecting rods (42,44) is coupled to at least one of the mounting arms (22,24,26,28; 22',24',26',28') via an auxiliary arm (46,48,50,52) rigidly connected to the mounting arm.

8. An underride protection device (10;10') according to any one of the preceding Claims, further **characterised by** an actuating device (62;62') co-operating with the mounting assembly (18,20;18',20') or with the underride protection barrier (12;12') for the alternative movement of the underride protection barrier (12;12') between the retracted position and the extended position.

9. An underride protection device (10) according to Claim 7, **characterised in that** one of the mounting devices (18,20) can be driven by the actuating device (62) for moving the underride protection barrier (12) and the connecting rods (42,44) transmit the movement of the driven mounting device (20) to the other mounting device (18) so as to move the other mounting device (18) essentially in synchronism with the driven the mounting device (20).

10. An underride protection device (10') according to Claim 8, **characterised in that** the actuating device (62') acts between the first mounting device (18') and the second mounting device (20').

11. An underride protection device (10') according to Claim 10, **characterised in that** the actuating device (62') comprises an actuatable piston-cylinder assembly (62'), wherein one component (64') of piston (68') and cylinder (64') is mounted on the right-hand mounting device (18'), preferably on a mounting arm (22',24') of the right-hand mounting device (18'), and the other component (68') is mounted on the left-hand mounting device (20'), preferably on a mounting arm (26',28') of the left-hand mounting device (20').

12. An underride protection device (10) according to Claim 8 or 9, **characterised in that** the actuating device (62) comprises an actuatable piston-cylinder assembly (62).

13. An underride protection device (10) according to Claim 12, **characterised in that** one component (64) of piston (68) and cylinder (64) is to be mounted at the rear of the vehicle or is mounted on the mounting support (16) or the underride protection barrier (12), and the other component (68) of piston (68) and cylinder (64) is mounted on one of the two mounting devices (18,20), preferably on the nearest mounting arm (28) of one of the two mounting devices (18,20).

14. An underride protection device (10;10') according to any one of Claims 11 to 13, **characterised in that** the piston-cylinder assembly (62,62') is coupled to at least one of the mounting arms (22,24,26,28; 22',24',26',28') via an actuating arm (70;70';71') rigidly connected to the mounting arm (28;24,28').

15. An underride protection device (10;10') according to any one of the preceding Claims, **characterised in that** the mounting arms (22,24,26,28; 22',24',26',28') of the two mounting devices (18,20;18',20') are arranged in an expanded position in the extended position of the underride protection barrier (12;12').

16. An underride protection device (10;10') according to any one of the preceding Claims, **characterised in that** the mounting arms (22,24,26,28; 22',24',26',28') of a respective mounting device (18,20;18',20') in the retracted position of the underride protection barrier (12;12') are arranged in a collapsed position with maximum proximity to the mounting arms (22,24,26,28; 22',24', 26',28').

## Revendications

1. Dispositif anti-encastrement (10 ; 10') pour un véhicule de transport de charges, comprenant
- une barre anti-encastrement oblongue (12; 12'), disposée normalement horizontalement, destinée à protéger une zone à l'arrière du véhicule de transport de charges contre le télescopage et/ou l'encastrement d'un autre véhicule, et
- un agencement d'attache (18, 20 ; 18', 20') comportant deux dispositifs d'attache (18, 20 ; 18', 20') disposés au niveau de la barre anti-encastrement (12 ; 12'), espacés l'un de l'autre dans le sens de la longueur de ladite barre anti-encastrement (12 ; 12'), et destinés à la fixation de la barre anti-encastrement (12 ; 12') à l'arrière du véhicule,
sachant que les dispositifs d'attache (18, 20 ; 18', 20') présentent respectivement deux bras d'attache (22, 24, 26, 28 ; 22', 24', 26', 28') reliés ensemble par une articulation (38, 40), dont un premier bras d'attache (22, 26 ; 22', 26') est respectivement relié de manière articulée avec la barre anti-encastrement (12 ; 12') et un second bras d'attache (24, 28 ; 24', 28') est à monter de manière articulée sur l'arrière du véhicule ou est monté de manière articulée sur un support de montage (16 ; 16') à fixer à l'arrière du véhicule de manière à ce que la barre anti-encastrement (12 ; 12') soit mobile via un mouvement articulé des bras d'attache (22, 24, 26, 28 ; 22', 24', 26', 28'),
**caractérisé en ce que** la barre anti-encastrement (12 ; 12') comprend en outre une première bielle motrice (42), laquelle passe entre les deux premiers bras d'attache (22, 26 ; 22', 26') et est reliée de manière articulée avec ces derniers, et comprend une seconde bielle motrice (44), laquelle passe entre les deux seconds bras d'attache (24, 28 ; 24', 28') et est reliée de manière articulée avec ces derniers, sachant que les bielles motrices (42, 44) sont disposées de telle façon que les mouvements de pivotement des bras d'attache (22, 26, 24, 28 ; 22', 24', 26' 28') correspondants l'un à l'autre des deux dispositifs d'attache (18, 20 ; 18' 20') s'effectuent pour l'essentiel de façon synchrone.

2. Dispositif anti-encastrement (10 ; 10') selon la revendication 1, **caractérisé en ce que** la barre anti-encastrement (12 ; 12') est mobile via un mouvement articulé des bras d'attache (22, 24, 26, 28 ; 22', 24', 26', 28') entre une position rentrée et une position sortie de telle manière que la barre anti-encastrement (12 ; 12') et les bras d'attache (22, 24, 26, 28 ; 22', 24', 26', 28') se meuvent pour l'essentiel sur un plan commun.

3. Dispositif anti-encastrement (10 ; 10') selon la revendication 1 ou la revendication 2, **caractérisé en ce que** la position sortie est une position de sécurité verrouillant la zone à protéger et la position rentrée est une position de déblocage déverrouillant la zone.

4. Dispositif anti-encastrement (10 ; 10') selon l'une quelconque des revendications précédentes, **caractérisé en ce que** les bielles motrices (42, 44) sont aménagées de telle façon que les bras d'attache (22, 26, 24, 28 ; 22', 24', 26', 28') reliés respectivement ensemble via ces dernières pivotent pour l'essentiel autour d'axes de pivotement parallèles et avec sens de rotation opposé l'un à l'autre.

5. Dispositif anti-encastrement (10 ; 10') selon l'une quelconque des revendications précédentes, **caractérisé en ce que** des articulations (38, 40) des deux dispositifs d'attache (18, 20 ; 18', 20') s'écartent l'une de l'autre lors du mouvement de la barre anti-encastrement (12; 12') de la position sortie dans la position rentrée.

6. Dispositif anti-encastrement (10 ; 10') selon l'une quelconque des revendications précédentes, **caractérisé en ce que** les bielles motrices (42, 44) guident le mouvement des dispositifs d'attache (18, 20 ; 18', 20') de telle façon qu'à l'état monté sur le véhicule, l'orientation de la barre anti-encastrement (12 ; 12') par rapport au véhicule reste pour l'essentiel constante au cours du mouvement de la barre anti-encastrement (12 ; 12') entre la position rentrée et la position sortie.

7. Dispositif anti-encastrement (10; 10') selon l'une quelconque des revendications précédentes, **caractérisé en ce qu'**au moins l'une des bielles motrices (42, 44) est accouplée à au moins l'un des bras d'attache (22, 24, 26, 28 ; 22', 24', 26', 28') par l'intermédiaire d'un bras auxiliaire (46, 48, 50, 52) relié de manière rigide avec le bras d'attache.

8. Dispositif anti-encastrement (10 ; 10') selon l'une quelconque des revendications précédentes, en outre **caractérisé par** un système de commande (62 ; 62') coopérant avec l'agencement d'attache (18, 20 ; 18' 20') ou avec la barre anti-encastrement (12 ; 12') et destiné à mouvoir à volonté la barre anti-encastrement (12 ; 12') entre la position rentrée et la position sortie.

9. Dispositif anti-encastrement (10) selon la revendication 7, **caractérisé en ce que** l'un des dispositifs d'attache (18, 20) peut être actionné grâce au système de commande (62) destiné à mouvoir la barre anti-encastrement (12), et les bielles motrices (42, 44) transmettent le mouvement du dispositif d'attache actionné (20) à l'autre dispositif d'attache (18) afin de mouvoir l'autre dispositif d'attache (18) de manière pour l'essentiel synchrone avec le dispositif d'attache actionné (20).

10. Dispositif anti-encastrement (10') selon la revendication 8, **caractérisé en ce que** le système de commande (62') opère entre le premier dispositif d'attache (18') et le second dispositif d'attache (20').

11. Dispositif anti-encastrement (10') selon la revendication 10, **caractérisé en ce que** le système de commande (62') comprend un agencement piston/cylindre pouvant être activé (62'), dans lequel un composant (64') du piston (68') et du cylindre (64') est monté sur le dispositif d'attache droit (18'), de préférence sur un bras d'attache (22', 24') du dispositif d'attache droit (18'), et l'autre composant (68') est placé sur le dispositif d'attache gauche (20'), de préférence sur un bras d'attache (26', 28') du dispositif d'attache gauche (20').

12. Dispositif anti-encastrement (10) selon la revendication 8 ou 9, **caractérisé en ce que** le système de commande (62) comprend un agencement piston/cylindre (62) pouvant être activé.

13. Dispositif anti-encastrement (10) selon la revendication 12, **caractérisé en ce qu'**un composant (64) du piston (68) et du cylindre (64) est à monter sur l'arrière du véhicule ou est monté sur le support de montage (16) ou sur la barre anti-encastrement (12) et l'autre composant (68) du piston (68) et du cylindre (64) est monté sur l'un des deux dispositifs d'attache (18, 20), de préférence sur un bras d'attache immédiatement à côté (28) de l'un des deux dispositifs d'attache (18, 20).

14. Dispositif anti-encastrement (10 ; 10') selon l'une quelconque des revendications 11 à 13, **caractérisé en ce que** l'agencement piston/cylindre (62 ; 62') est accouplé à au moins l'un des bras d'attache (22, 24, 26, 28 ; 22', 24', 26', 28') par l'intermédiaire d'un bras de commande (70 ; 70', 71') relié de manière rigide avec le bras d'attache (28 ; 24', 28').

15. Dispositif anti-encastrement (10 ; 10') selon l'une quelconque des revendications précédentes, **caractérisé en ce que** les bras d'attache (22, 24, 26, 28 ; 22', 24', 26', 28') des deux dispositifs d'attache (18, 20 ; 18', 20') sont disposés dans une position déployée dans la position sortie de la barre anti-encastrement (12 ; 12').

16. Dispositif anti-encastrement (10 ; 10') selon l'une quelconque des revendications précédentes, **caractérisé en ce que** les bras d'attache (22, 24, 26, 28 ; 22', 24', 26', 28') d'un dispositif d'attache respectif (18, 20 ; 18', 20') sont disposés dans une position repliée avec rapprochement maximal des bras d'attache (22, 24, 26, 28 ; 22', 24', 26', 28') dans la position rentrée de la barre anti-encastrement (12 ; 12').
